# EUROPEAN PATENT APPLICATION

(11) **EP 1 837 174 A1**
(43) Date of publication of application: **26.09.2007**
(21) Application number: 06113630.5
(22) Date of filing: 08.05.2006
(51) Int. Cl.: B32B 27/08, B32B 3/22, H01H 13/702

(54) **Button structure for displaying a multi-layered appearance**

(71) Applicant: Silitech Technology Corp., Tamsui Taipei Hsien (TW)
(72) Inventor: Lin, Chun-Wei, I Lan Hsien (TW); Hsieh, Ching-Chang, Nantou County (TW)
(74) Representative: Viering, Jentschura & Partner

(57) **Abstract**

A button structure for displaying a multi-layered appearance includes a first flexible body, a film layer, a first color layer, a second flexible body, a second color layer, and a third color layer. The film layer is disposed on a top surface of the first flexible body. The first color layer is disposed between the first flexible body and the film layer. The second flexible body is disposed on a top surface of the film layer. The second color layer is disposed between the second flexible body and the film layer. The third color layer is disposed on a top surface of the second flexible body. Hence, the above-mentioned layers are integratedly formed together to display a multi-layered appearance.

## Description

### BACKGROUND OF THE INVENTION

### 1. Field of The Invention

The present invention relates to a button structure, and particularly relates to a button structure having an integrated structure for displaying a multi-layered appearance.

### 2. Description of the Related Art

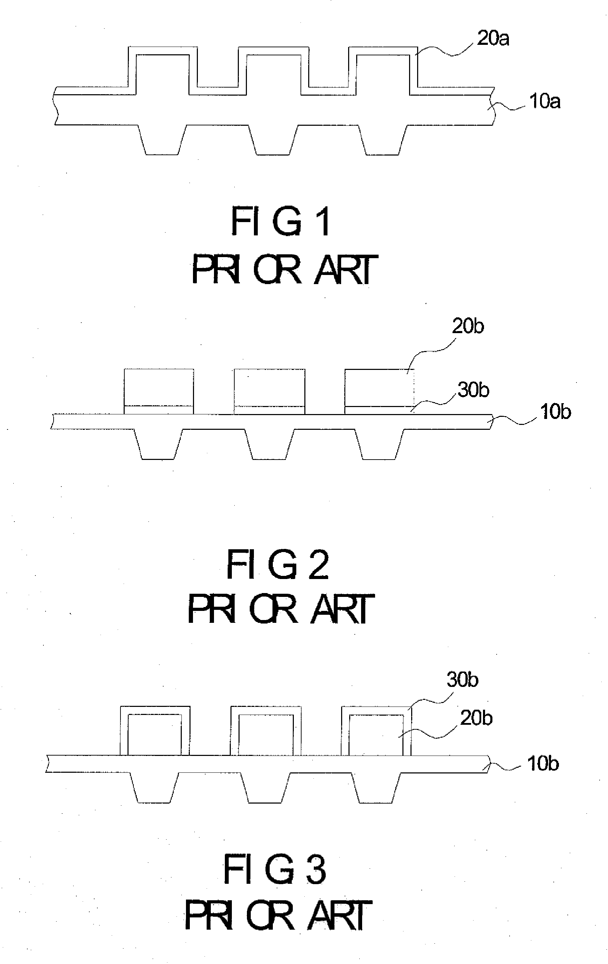

Referring to Fig. 1, a first known button structure includes a flexible body 10a and a color layer 20a printed on a top surface of the flexible body 10a. The color layer 20a has a plurality of patterns, symbols, words, or numerals printed or coated on a reverse side thereof.

However, the color layer 20a can only display a single appearance effect for the first known button structure. Hence, the appearance of the button structure is limited.

Referring to Fig. 2, a second known button structure includes a flexible body 10b, a button body 20b, and a color layer 30b. The color layer 30b is printed or coated on the flexible body 10b, and the button body 20b is printed or coated on the color layer 30b. The color layer 30b can be a plurality of patterns, symbols, words, or numerals. Referring to Fig. 3, the color layer 30b can be printed or coated on the button body 20b, and then button body 20b is attached onto the flexible body 10b to form a second button structure.

However, due to the button body 20b, the thickness of the known button structure is increased. Hence, the known button structure cannot be reduced in thickness. Besides, the known manufacturing method needed to produce many molds is complex and the cost cannot be reduced.

### SUMMARY OF THE INVENTION

The present invention provides a button structure for displaying a multi-layered appearance. The button structure has many different colors and layer-changing effects, and the button structure is reliable.

Moreover, the button structure of the present invention is manufactured in one single piece, and reduces the complexity and expense of known processes.

One aspect of the invention is a button structure for displaying a multi-layered appearance. The button structure comprises a first flexible body, a film layer, a first color layer, a second flexible body, a second color layer, and a third color layer. The film layer is disposed on a top surface of the first flexible body. The first color layer is disposed between the first flexible body and the film layer. The second flexible body is disposed on a top surface of the film layer. The second color layer is disposed between the second flexible body and the film layer. The third color layer is disposed on a top surface of the second flexible body.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

The various objects and advantages of the present invention will be more readily understood from the following detailed description when read in conjunction with the appended drawings, in which:
Fig. 1 is a schematic view of a first button structure in accordance with a prior art;
Fig. 2 is a schematic view of a second button structure in accordance with a prior art;
Fig. 3 is a third schematic view of a third button structure in accordance with a prior art;
Fig. 4 is a schematic view of a button structure for displaying a multi-layered appearance in accordance with a first embodiment of the present invention;
Fig. 5 is a schematic view of a button structure for displaying a multi-layered appearance in accordance with a second embodiment of the present invention;
Fig. 6 is a schematic view of a button structure for displaying a multi-layered appearance in accordance with a third embodiment of the present invention; and
Fig. 7 is a schematic view of a button structure for displaying a multi-layered appearance in accordance with a fourth embodiment of the present invention.

### DETAILED DESCRIPTION OF PREFERRED EMBODIMENTS

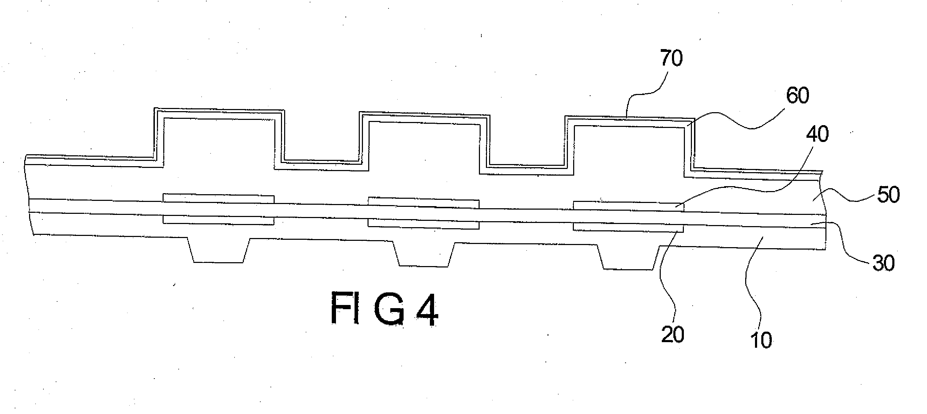

Fig. 4 shows a schematic view of a button structure for displaying a multi-layered appearance in accordance with a first embodiment of the present invention. The button structure comprises a first flexible body 10, a first color layer 20, a film layer 30, a second color layer 40, a second flexible body 50, a third color layer 60, and a protective layer 70.

The first flexible body 10 is made of a flexible rubber material or a plastic material such as silicon rubber.

The film layer 30 can be a plastic sheet or plastic film made of transparent plastic material, a metal sheet or metal film made of metal material, an EL (Electro-luminescent) sheet, or a glass material. Moreover, the film layer 30 is integratedly disposed on a top surface of the first flexible body 10 for increasing the rigidity of the first flexible body 10.

The first color layer 20 is disposed between the first flexible body 10 and the film layer 30 by a printing or coating method. The first color layer 20 can be a plurality of patterns, symbols, words, or numerals with different colors.

The second flexible body 50 is made of flexible rubber material or plastic material such as silicon rubber. The second flexible body 50 is integratedly disposed on a top surface of the film layer 30. Moreover, the second flexible body 50 is jointed with the first flexible body 10 through the film layer 30 to form a complex material structure with rigidity.

The second color layer 40 can be a plurality of patterns, symbols, words or numerals with different colors, and the second color layer 40 is disposed between the second flexible body 50 and the film layer 30 in a printing or coating manner. Furthermore, the patterns, symbols, words or numerals can be made of metal material. Hence, the second color layer 40 displays a metal appearance effect.

The third color layer 60 can be a plurality of patterns, symbols, words or numerals with different colors, and the third color layer 60 is disposed on a top surface of the second flexible body 50 in a printing or coating manner. Because the second flexible body 50 is disposed between the third color layer 60 and the second color layer 40, and the film layer 30 is disposed between the second color layer 40 and the first color layer 20, the three color layers 20, 40, 60 are separated from each other for displaying a multi-layered appearance that includes different patterns, symbols, words and/or numerals with different colors.

The protective layer 70 can be a wear-resistant resin film or printing ink film, and the protective layer 70 is formed on an external surface of the third color layer 60 for preventing the third color layer 60 such as patterns, symbols, words and/or numerals from being scraped. Moreover, the protective layer 70 still has good wear-resistance after a long period of use. Hence the appearance of the button structure is reliable.

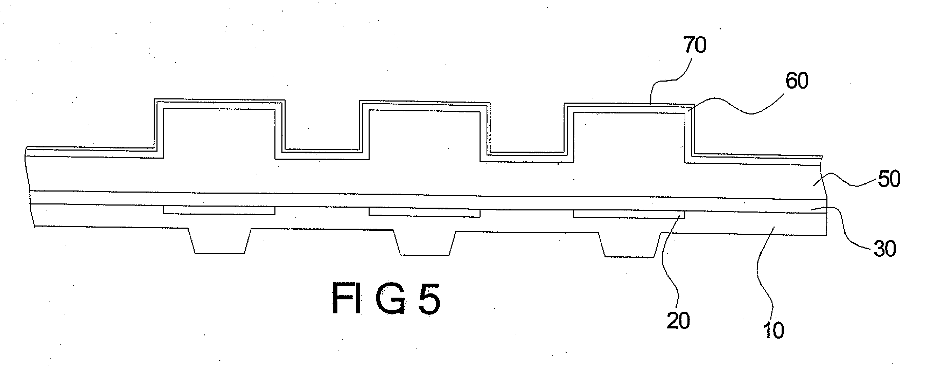

Fig. 5 shows a schematic view of a button structure for displaying a multi-layered appearance in accordance with a second embodiment of the present invention. The button structure of the second embodiment lacks the second color layer 40 of the first embodiment. Hence, only the first and the third color layers 20, 60 are separated from each other for displaying a multi-layered appearance that includes different patterns, symbols, words and/or numerals with different colors.

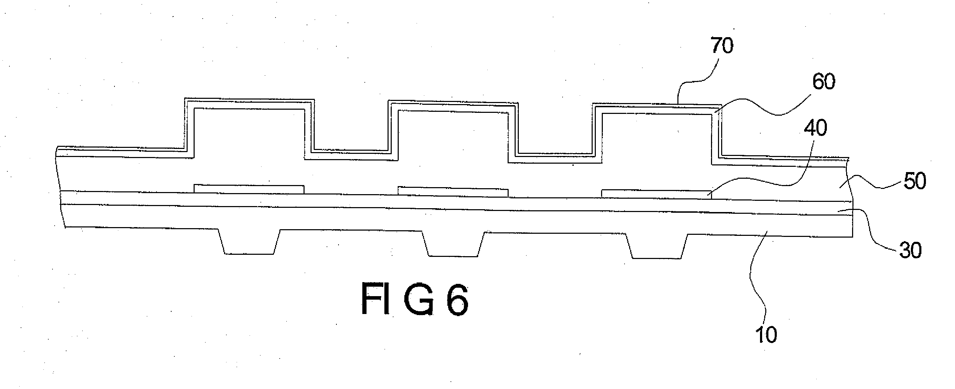

Fig. 6 shows a schematic view of a button structure for displaying a multi-layered appearance in accordance with a third embodiment of the present invention. The button structure of the third embodiment lacks the first color layer 20 of the first embodiment. Hence, only the second and the third color layers 40, 60 are separated from each other for displaying a multi-layered appearance that includes different patterns, symbols, words and/or numerals with different colors.

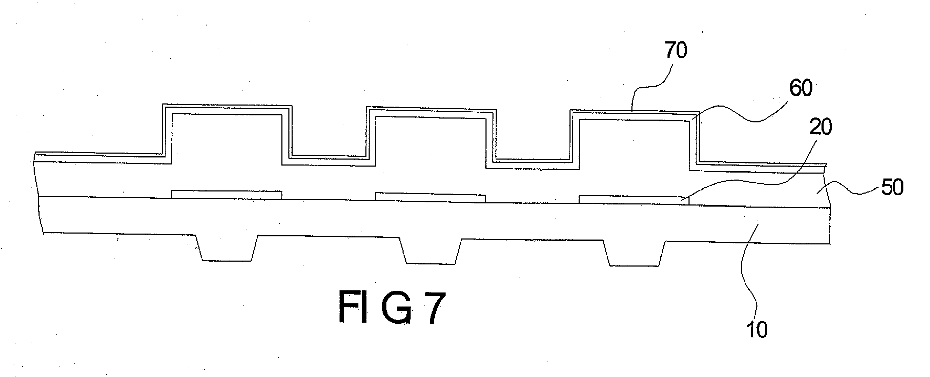

Fig. 7 shows a schematic view of a button structure for displaying a multi-layered appearance in accordance with a fourth embodiment of the present invention. The difference between the fourth embodiment and the first embodiment is that in the fourth embodiment, the second flexible body 50 is disposed on the top surface of the flexible body 10. The first color layer 20 is disposed between the first flexible body 10 and the second flexible body 50. Hence, the first and the third color layers 20, 60 are separated from each other for displaying a multi-layered appearance that includes different patterns, symbols, words and/or numerals with different colors.

In conclusion, the present invention can display a multi-layered appearance by molding and integratedly forming the above-mentioned layers with different materials and colors together. Hence, the button structure's appearance has multi-layered changing effect and the button structure is reliable without adhesion processes. Moreover, the molding process uses a molding machine without using many plastic molds or tools. Hence, the present invention has some advantages such as reducing cost and making thin button structure.

Although the present invention has been described with reference to the preferred embodiments thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A button structure for displaying a multi-layered appearance, comprising:
a first flexible body;
a film layer disposed on a top surface of the first flexible body;
a first color layer disposed between the first flexible body and the film layer;
a second flexible body disposed on a top surface of the film layer;
a second color layer disposed between the second flexible body and the film layer; and
a third color layer disposed on a top surface of the second flexible body.

2. The button structure as claimed in claim 1, further comprising a protective layer formed on an external surface of the third color layer.

3. The button structure as claimed in claim 2, wherein the protective layer is a wear-resistant resin film or printing ink film.

4. The button structure as claimed in claim 1, wherein both the first and the second flexible body are made of flexible rubber material or plastic material.

5. The button structure as claimed in claim 1, wherein the film layer is a plastic sheet or plastic film made of plastic material.

6. The button structure as claimed in claim 1, wherein the film layer is a metal sheet or metal film made of metal material.

7. The button structure as claimed in claim 1, wherein the film layer is an EL (Electro-luminescent) sheet.

8. The button structure as claimed in claim 1, wherein the film layer is made of glass material.

9. The button structure as claimed in claim 1, wherein the first, the second, and the third color layer all are a plurality of patterns, symbols, words or numerals.

10. The button structure as claimed in claim 9, wherein the patterns, symbols, words or numerals are made of metal material.

11. A button structure for displaying a multi-layered appearance, comprising:
a first flexible body;
a film layer disposed on a top surface of the first flexible body;
a first color layer disposed between the first flexible body and the film layer;
a second flexible body disposed on a top surface of the film layer; and
a third color layer disposed on a top surface of the second flexible body.

12. A button structure for displaying a multi-layered appearance, comprising:
a first flexible body;
a film layer disposed on a top surface of the first flexible body;
a second flexible body disposed on a top surface of the film layer;
a second color layer disposed between the second flexible body and the film layer; and
a third color layer disposed on a top surface of the second flexible body.

13. A button structure for displaying a multi-layered appearance, comprising:
a first flexible body;
a second flexible body disposed on a top surface of the flexible body;
a first color layer disposed between the first flexible body and the second flexible body; and
a third color layer disposed on a top surface of the second flexible body.
